(19) **Europäisches Patentamt**
**European Patent Office**
**Office européen des brevets**

(11) **EP 0 893 591 B1**

(12) **EUROPEAN PATENT SPECIFICATION**

(45) Date of publication and mention
of the grant of the patent:
**08.09.2004 Bulletin 2004/37**

(51) Int Cl.[7]: **F02D 37/02**, F02D 41/34,
F02D 41/26

(21) Application number: **98113270.7**

(22) Date of filing: **16.07.1998**

(54) **Engine control apparatus and control method**

Methode und Gerät für eine Motorsteuerung

Méthode et dispositif de commande de moteur

(84) Designated Contracting States:
**DE ES FR IT**

(30) Priority: **23.07.1997 JP 19741797**
**18.06.1998 JP 17122698**

(43) Date of publication of application:
**27.01.1999 Bulletin 1999/04**

(73) Proprietor: **Honda Giken Kogyo Kabushiki Kaisha**
**Minato-ku, Tokyo (JP)**

(72) Inventors:
• **Konno, Takesi**
**1-4-1 Chuo, Wako-shi, Saitama-ken (JP)**
• **Sato, Morio**
**1-4-1 Chuo, Wako-shi, Saitama-ken (JP)**

(74) Representative: **Liska, Horst, Dr.-Ing. et al**
**Weickmann & Weickmann**
**Patentanwälte**
**Postfach 86 08 20**
**81635 München (DE)**

(56) References cited:
**EP-A- 0 754 846**        **US-A- 4 229 793**
**US-A- 5 386 810**        **US-A- 5 437 254**

• **PATENT ABSTRACTS OF JAPAN vol. 009, no. 279 (M-427), 7 November 1985 (1985-11-07) & JP 60 122237 A (KAWASAKI JUKOGYO KK), 29 June 1985 (1985-06-29)**
• **PATENT ABSTRACTS OF JAPAN vol. 007, no. 050 (M-197), 26 February 1983 (1983-02-26) & JP 57 198328 A (KAWASAKI JUKOGYO KK), 4 December 1982 (1982-12-04)**

EP 0 893 591 B1

## EP 0 893 591 B1

### Description

The present invention relates to an engine control apparatus for accurately controlling spark ignition timing and/or fuel injection timing without being affected by variations in engine revolution speed even at a high revolution speed in a gasoline engine of mainly a motorcycle.

US-A-4 229 793 discloses an engine control apparatus for controlling a fuel injection time based on a pulser signal generated by a pulser coil provided for a reluctor installed on a rotor rotating in a manner interlocked with a crankshaft.

In the related art control apparatus for electronically controlling an engine, in some cases, the processing time of the control becomes relatively too long so that the control apparatus is not capable of keeping up with variations in engine operating state in a real time manner.

As a means for solving this problem, the spark ignition timing and/or the fuel injection volume is fixed in case the processing time becomes relatively too long or the processing itself is carried out in synchronization with the rotational period as is disclosed in Japanese Patent Laid-open No. Hei2-48731.

Fig. 10 is a block diagram showing a configuration of main components composing a related art engine control apparatus. As shown in the figure, the related art engine control apparatus comprises a sensor 51 and an engine control unit (ECU) 55.

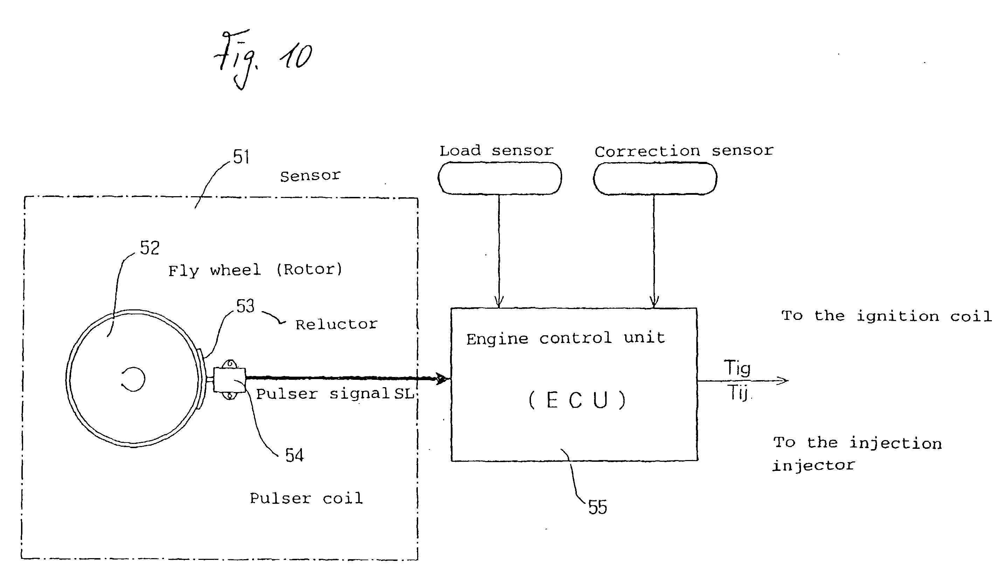

Fig. 9 (a) is a timing chart of spark ignition timing control of the engine control apparatus shown in Fig. 10.

The engine control unit 55 is an example of a generally known control unit including a microcomputer. Pulser signals SL intermittently generated by a pulser coil 54 and a reluctor 53 provided on a rotor 52 linked to a crank shaft are supplied to the engine control unit 55. In addition, signals generated by a variety of sensors including a load sensor are also supplied to the engine control unit 55.

The engine control unit 55 computes a period CR of the intermittently generated pulser signals, that is, a period of time between pulser signals SL1 and SL3 shown in Fig. 9 (a), in order to find the revolution speed Ne of the engine. The revolution speed Ne is used to search an ignition timing table for proper ignition timing.

If the engine control unit 55 is also used for controlling fuel injection, the revolution speed Ne and a signal generated by the load sensor of the engine are used to search a fuel injection map for a fuel injection volume.

The value representing ignition timing found in the search is a turning angle relative to a standard position of the crank rotation, that is, the so-called BTDC (Before Top Dead Center): the number of degrees before the top dead center of the crank. Thus, the ignition time Tig can be found by converting the turning angle into a time within the period CR.

As the contents of an ignition counter which starts counting by taking the arrival of a pulser signal SL5 as a reference match the ignition time Tig, spark ignition is generated by supplying a signal to the ignition coil.

In the related art technology described above, however, it takes time to search the table and the map and carry out the processing to find the ignition time. In particular, it takes a long time to carry out the processing for converting the ignition timing into an ignition time because the conversion involves division (CR = 1/N). In addition, the processing time varies instead of remaining fixed due to the fact that values of parameters change. As a result, in some cases, the processing to find an ignition time Tig can not be completed before the ignition time Tig.

Furthermore, during a low speed operation such as an idling state, a change in revolution speed occurs even within one rotation, making the revolution speed of the crank to vary during a period of time between the arrival of the pulser signal SL5 and the ignition time Tig. As a result, even in the case of a large value of the ignition time Tig wherein the processing to compute the ignition time Tig is completed prior to the ignition time Tig, the ignition timing at the ignition time Tig after the occurrence of a change in revolution speed does not match the optimum ignition timing of the engine. The smaller the number of cylinders provided in the engine, the larger the shift of the computed ignition timing from the true optimum ignition timing of the engine.

Fig. 9 (b) is a timing chart of other related art spark ignition timing control different from that shown in Fig. 9 (a). The difference between the control shown in Fig. 9 (b) and that shown in Fig. 9 (a) is explained as follows.

In the case of the control shown in Fig. 9 (a), the control processing based on signal information obtained in a period CR2 is carried out in a period CR3 following the period CR2. A counter starts counting at the beginning of the period CR3 and ignition is generated in accordance with an outcome of comparison of the contents of the counter with a result of the processing. In the case of the control shown in Fig. 9 (b), on the other hand, ignition is generated in accordance with an outcome of comparison of a result of processing carried out in the period CR2 and the contents of a counter starting to count at the beginning of a period CR3 following the period CR2.

Thus, the control shown in Fig. 9 (b) is capable of solving the problem that the processing can not be completed prior to an ignition time Tig. In the case of the control shown in Fig. 9 (b), however, the processing is based on signal information obtained in the immediately preceding period as opposed to the control shown in Fig. 9 (a) wherein the processing is based on signal information obtained in the same period as the processing itself. As a result, in the case of the control shown in Fig. 9 (b), actual ignition timing does not match the optimum ignition timing for carrying out ignition in the engine in case the revolution speed of the crank shaft changes considerably, making it impossible to carry out an accurate ignition operation. In addition, the problem caused by a shift of the computed ignition timing from the true optimum ignition timing of the engine can not be solved even if the control shown in Fig. 9 (b) is adopted.

Ignition control has been explained by referring to Figs. 9 (a) and 9 (b). Fuel injection control is similar to the ignition control. However, the fuel injection control requires a different number of sensors for generating input signals. For example, in the case of the fuel injection control, a water temperature sensor and an intake pressure sensor are added, making the operation to search a map and correction processing complicated. As a result, the total time it takes to carry out the processing becomes longer.

A map is searched for a fuel injection volume proper for a revolution speed (N) and signals generated by a variety of sensors. Data representing characteristic values with respect to signals generated by a variety of sensors and the revolution speed (N) of the engine crank shaft is stored in advance in a storage device such as a ROM in the time form.

For example, the map is searched for a fuel injection volume proper for a given revolution speed and a given throttle angle.

By the same token, a table is searched for ignition timing data proper for a revolution speed (N). Data representing characteristic values with respect to the revolution speed (N) of the engine crank shaft is stored in advance in a storage device such as a ROM as angles.

For example, the table is searched for BTDC data as ignition timing proper for a given revolution speed.

The processing time it takes to search the table or the map is not fixed and relatively long.

A fuel injection volume found in the search of the map is a value proper for given signals generated by a variety of sensors and a given revolution speed whereas timing advance data obtained from the search of the table is a BTDC angle proper for a given revolution speed.

Since a parameter that can serve as a basis for an actual ignition operation is timing with respect to a lapse of time since the arrival of the pulser signal SL5, however, it is necessary to convert an angle to a time value. Since the conversion of the angle into a time value entails division (CR = 1/N), the time it takes to carry out the processing becomes longer. In addition, since the values of parameters vary, the processing time also varies instead of remaining at a fixed value.

It is thus an object of the present invention addressing the problems described above to provide an engine control apparatus that is capable of carrying out processing within a predetermined period of time and reducing the magnitude of a shift from a most recent rotational period even at high revolution speeds.

It is another object of the present invention to provide an engine control apparatus capable of reducing the magnitude of a shift between an actual crank angle of the engine and an ignition counter value which results while a rotational period is being computed due to a variation in revolution speed.

In the present state of the art, it is desirable to employ a low cost microcomputer in the category of the order of 4 to 8 bits in a vehicle from the cost point of view, particularly, in the case of a motorcycle. If such a microcomputer is used for executing a complex control program, however, the processing power of the microcomputer to complete the whole processing in a short period of time will be insufficient. In addition, the clock frequency, that is the processing speed, of such a microcomputer is low, making it necessary to replace such a microcomputer with a high performance and, thus, expensive microcomputer.

It is thus an ultimate object of the present invention to provide a high performance but low cost engine control apparatus that is capable of executing complex control with a simple configuration.

In order to solve the problems described above, there is provided an engine control apparatus according to claim 1 which is characterized in that control processing is divided into processing carried out by a search/processing means with a processing time thereof variable dependently on an input signal and processing carried out by an operation timing processing means with a processing time thereof invariable independently of an input signal, and the processing carried out by the search/processing means leads ahead of the processing carried out by the operation timing processing means by 1 rotational period.

In the engine control apparatus according to claim 1, control processing is divided into processing carried out by the search/processing means and processing carried out by the operation timing processing means, and the processing carried out by the search/processing means leads ahead of the processing carried out by the operation timing processing means by 1 rotational period. As a result, it is possible to obtain a spark ignition time and/or a fuel injection time from a most recent sensor signal not affected by variations in engine revolution speed and variations in processing time accompanying changes in table search result value and/or map search result value.

In addition, according to claim 2, the engine control apparatus described above is further characterized in that a ratio of a circumference of the reluctor to the rotational period is equal to $1/2^N$ where the symbol N is a natural number.

In the engine control apparatus according to claim 2, the ratio of a circumference of the reluctor to the rotational period is equal to $1/2^N$ where the symbol N is a natural number. As a result, quantities such as the revolution speed can be converted into a time by carrying out an easy shift operation instead of the related art division (CR = 1/N).

A control method according to claim 3 is a control method of an engine control apparatus for controlling a spark ignition time and/or a fuel injection time based on a pulser signal generated by a pulser coil provided for a reluctor installed on a rotor rotating in a manner interlocked with a crank shaft, the control method characterized in that processing from a process to input the pulser signal to a process to output a spark ignition time and/or a fuel injection time is divided into sub-processing with a processing time thereof variable dependently on the value of an input signal and sub-processing with a processing time thereof invariable independently of the value of an input signal and said sub-processing with a variable processing time is carried out in a rotational period leading ahead of said sub-processing with an invariable processing time by 1 rotational period.

According to the control method of an engine control apparatus provided by the present invention, processing from a process to input the pulser signal to a process to output a spark ignition time and/or a fuel injection time is divided into sub-processing with a processing time thereof variable dependently on the value of an input signal and sub-processing with a processing time thereof invariable independently of the value of an input signal and the sub-processing with a variable processing time is carried out in a rotational period leading ahead of the sub-processing with an invariable processing time by 1 period. As a result, it is possible to obtain a spark ignition time and/or a fuel injection time computed in a rotational period based on most recent sensor signals without being affected by variations in processing time attributed to variations in table and/or map searched values.

The present invention will become more apparent from a careful study of the following detailed description of some preferred embodiments with reference to accompanying diagrams.

Fig. 1 is a block diagram showing an overall configuration of an engine control apparatus provided by the present invention;

Fig. 2 is a block diagram showing the configuration of a search/processing means employed in the engine control apparatus provided by the present invention;

Fig. 3 is a diagram showing an overall configuration of an engine control apparatus according to claim 2;

Fig. 4 is shows a timing chart of spark ignition timing control and fuel injection timing control according to claims 1 and 2;

Fig. 5 shows a flowchart representing a control method adopted in the engine control apparatus provided by the invention;

Fig. 6 shows a flowchart representing another control method adopted in the engine control apparatus provided by the invention;

Fig. 7 shows a flowchart representing still another control method adopted in the engine control apparatus provided by the invention;

Fig. 8 shows a flowchart representing a further control method adopted in the engine control apparatus provided by the invention;

Fig. 9 is timing charts of the related art spark ignition timing control; and

Fig. 10 is a block diagram showing the related art engine control apparatus.

It should be noted that the present invention provides a low cost engine control apparatus with a simple configuration wherein control processing is divided into the following two parts:

processing to search a table and/or a map; and

processing to find a spark ignition time and/or a fuel injection time conducted in the immediately preceding rotational period on the basis of results of the search and processing to find a most recent spark ignition time and/or a most recent fuel injection time based on results of the processing in the immediately preceding rotational period and the most recent rotational period,

so that a spark ignition time and/or a fuel injection time not affected by variations in engine revolution speed and variations in processing time accompanying changes in table search result value and/or map search result value can be obtained, allowing accurate control to be executed.

In addition, the embodiment of the present invention can be applied to the processing to find a spark ignition time and/or a fuel injection time.

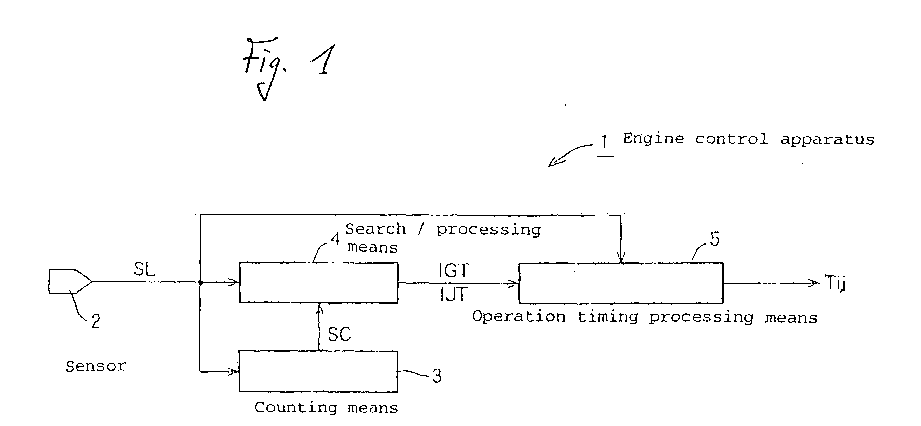

Fig. 1 is a block diagram showing principal components composing the engine control apparatus 1 according to claim 1. In general, an engine control apparatus 1 comprises a variety of sensors such as an engine revolution speed sensor, a throttle angle sensor, an intake manifold depression pressure (PB) sensor and a water temperature sensor, a storage device and a microcomputer. In particular, the engine control apparatus 1 shown in Fig. 1 comprises a sensor 2, a counting means 3, a search/processing means 4 and an operation timing processing means 5. Control of spark ignition timing is described as follows.

The sensor 2 adopts an electromagnetic pickup system using variations in reluctance. The sensor 2 comprises a reluctor having a circumference of 45° on part of a flywheel provided on the crank shaft and a pulser coil facing the reluctor through a gap.

The sensor 2 generates a pulser signal SL comprising a start counter signal SL1 consisting of odd-numbered pulses each generated at introduction of the rotating reluctor, and an end counter signal SL2 consisting of even-numbered pulses each generated at removal of the reluctor. That is to say, the start counter signal SL1 and the end counter signal SL2 are together referred to as the pulser signal SL. The sensor 2 outputs the pulser signal SL to the counting means 3, the search/processing means 4 and the operation timing processing means 5. It should be noted that the sensor 2 generates the pulser signal SL with a rectangular waveform by using a waveshaping circuit which is not shown in the figure.

Composed of components such as a crystal oscillator, a waveshaping circuit, a clock generating circuit, a counter circuit and a polarity discriminating circuit, the counting means 3 counts the number of pulses included in the pulser signal SL and outputs a command signal Sc lagging behind the pulser signal SL by 2 pulses to the search/processing means 4.

It should be noted that the start counter signal SL1 comprising odd-numbered pulses or the end counter signal SL2 comprising even-numbered pulses result from discrimination of the pulser signal SL by the polarity discriminating circuit. Thereafter, assume that the start counter signal SL1 is treated as the pulser signal SL.

Composed of a processing means, a search means and a storage/processing means, the search/processing means 4 searches a table for ignition timing data for a given revolution speed (N) of the engine derived from the pulser signal SL.

Then, a spark ignition time is found from a value found in the search of the table. As the command signal Sc is received from the computing means 3, a signal IGT of a processing result is supplied to the operation timing processing means 5.

The operation timing processing means 5 comprises a polarity discriminating circuit, a processing circuit and a memory such as a ROM. Receiving the most recent pulser signal SL (the odd numbered start counter signal SL1) from the sensor 2, the operation timing processing means 5 carries out processing based on the signal IGT (leading by 2 rotational periods) received from the search/processing means 4 and the rotational period leading ahead by 1 rotational period, outputting a signal Tig representing a spark ignition time.

In addition, when computing quantities such as the signal IGT based on the rotational period leading ahead by 1 rotational period, the operation timing processing means 5 converts an angle into a time value not by division (CR = 1/N), but by shift operations.

In order to allow the shift operations to be carried out, the numerator of the division is stored in advance as an angle and then divided by one rotation (360°). A result of the division indicates ignition timing represented by a fraction of 1 rotational period for a data value obtained as a result of a search carried out in a rotational period preceding by 2 rotational periods.

It should be noted that, since the fuel injection control has the same configuration and involves the same operation as the spark ignition control, explanation of the fuel injection control is omitted.

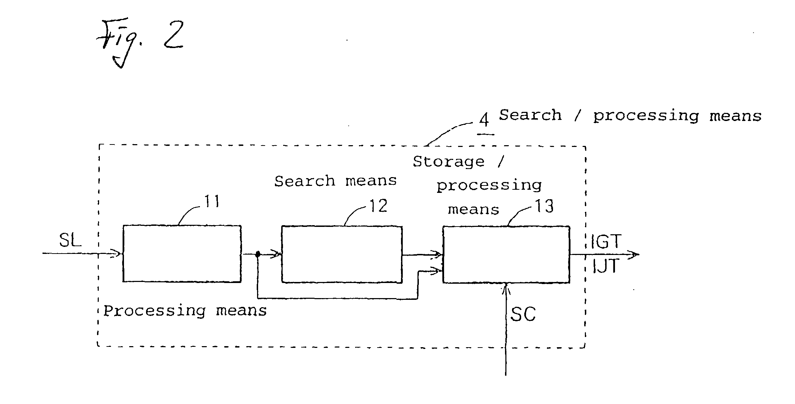

Fig. 2 is a block diagram showing the configuration of the search/processing means 4 provided by the present invention. It should be noted that Fig. 2 is used for explaining fuel injection control. As shown in the figure, the search/processing means 4 comprises a processing means 11, a search means 12 and a storage/processing means 13.

Composed of components such as a counter circuit, a polarity discriminating circuit and a processing circuit, the processing means 11 finds the period of the crank shaft of the engine from a period of time between 2 consecutive pulses of the pulser signal SL (the start counter signal SL1). The processing means 11 then computes the revolution speed from the period and supplies the revolution speed and the period to the search means 12 and the storage/processing means 13.

The search means 12 stores in advance fuel injection data appropriate for a variety of quantities produced by sensors such as the throttle angle sensor, the intake manifold depression pressure (PB) sensor and the water temperature sensor as well as appropriate for revolution speeds of the engine in a storage device such as ROM as a map.

For example, a fuel injection volume proper for a revolution speed of the engine and a throttle amount can be found from a 3-dimensional map stored in the storage device such a ROM.

The search means 12 fetches signals generated by a variety of sensors such as the throttle angle sensor, the intake manifold depression pressure (PB) sensor and the water temperature sensor, checking the signals to determine whether or not any of the signals has an abnormal value.

Subsequently, the search means 12 uses the revolution speed (N) derived from the pulser signal SL and a sensor signal to search a 3-dimensional map for a fuel injection volume. The value Ti of the fuel injection volume obtained from the search is then supplied to the storage/processing means 13.

Composed of components such as a polarity discriminating circuit, a counter circuit, a map searching circuit and a hold circuit, the storage/processing means 13 carries out processing to convert a numerical value Ti of the fuel injection volume obtained from the search of a map in the search means 12 into a fuel injection time by using a time function for conversion of a revolution speed into a rotational period and holds the numerical value resulting from the conversion processing. As the command signal Sc arrives from the counting means 3, a signal IGT representing a result of the conversion processing is supplied to the operation timing processing means 5.

As described above, the engine control apparatus according to claim 1 divides control processing into processing carried out by a search/processing means and processing carried out by an operation timing processing means. Since the processing carried out by the search/processing means leads ahead of the processing carried out by the operation timing processing by 1 operation period, it is possible to obtain a spark ignition time and/or a fuel injection time in a rotational period based on most recent sensor signals and not affected by variations in engine revolution speed and variations in processing time accompanying changes in table search result value and/or map search result value, allowing accurate control to be executed.

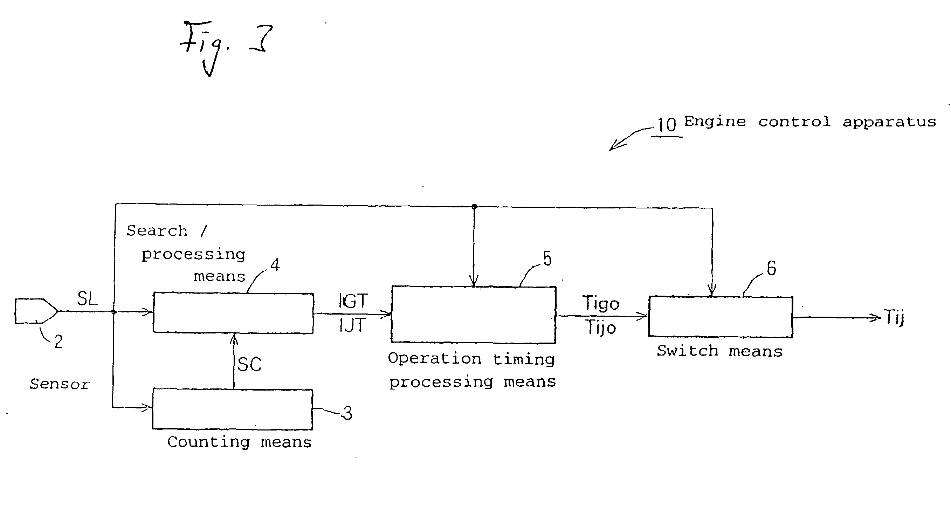

Fig. 3 is a diagram showing an overall configuration of an engine control apparatus according to claim 2. As shown in the figure, the engine control apparatus 10 comprises a sensor 2, a counting means 3, a search/processing means 4, an operation timing processing means 5 and a switch means 6. It should be noted that, since the sensor 2, the counting means 3, the search/processing means 4 and the operation timing processing means 5 are configured in the same way as the engine control apparatus shown in Fig. 1, their explanation is not repeated.

In addition, since the fuel injection control has the same configuration and involves the same operation as the spark ignition control, explanation of the fuel injection control is omitted.

The operation timing processing means 5 comprises a polarity discriminating circuit, a processing circuit and a memory such as a ROM. Receiving the most recent pulser signal SL (the start counter signal SL1) from the sensor 2, the operation timing processing means 5 computes, among other things, the IGT value of a signal based on the immediately preceding rotational period from the revolution speed of the crank shaft of the engine and the signal IGT coming from the search/processing means 4 and then immediately supplies a signal Tigo to represent a spark ignition time indicating an ignition time to the switch means 6.

Composed of components such as a processing circuit, a polarity discriminating circuit, a clock circuit and a storage device, the switch means 6 treats the signal Tigo as Tig representing a spark ignition time and outputs the spark ignition time Tig when the signal Tigo representing the spark ignition time obtained from the operation timing processing means 5 can be output till an even numbered end counter signal SL2 from the sensor 2 arrives.

When an even numbered end counter signal SL2 from the sensor 2 arrives during an operation to output the signal Tigo representing the spark ignition time, the processing is carried out by switching the immediately preceding rotational period to a period between the odd numbered start counter signal SL1 and the even numbered end counter signal SL2 in order to output the output signal Tig representing a spark ignition time.

The switching described above is carried out for the following reason. If the ignition time is a time allowing ignition right after the arrival of the odd numbered start counter signal SL1, an error due to a variation in revolution speed is small. If the ignition time is long, however, the error is big.

For this reason, in the case of a long ignition time such as the case of an engine low revolution speed, if the even numbered end counter signal SL2 arrives, the processing carried out on the basis of the immediately preceding rotational period is switched to processing carried out on the basis of a period of time between the most recent odd numbered start counter signal SL1 and the even numbered end counter signal SL2.

In addition, this processing is processing by switching an angle of 360° corresponding to 1 rotational period to an angle of 45° corresponding to an angle from the start counter signal SL1 to the end counter signal SL2. Since the circumference of the reluctor is 45°, the ratio of the circumference to the rotational period is $1/2^3$.

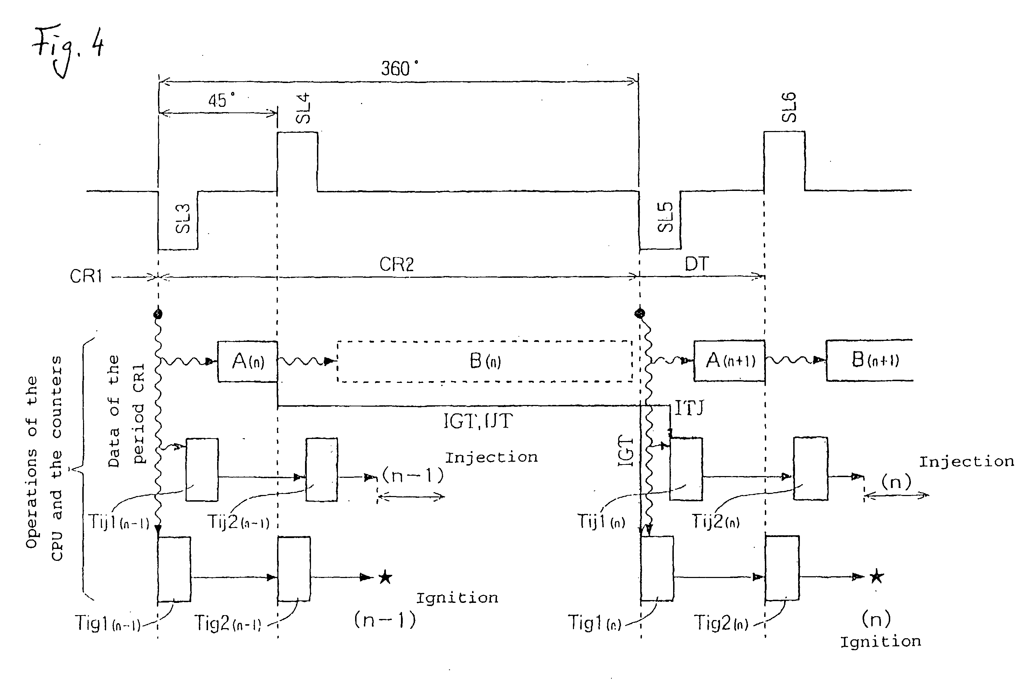

Fig. 4 shows a timing chart of the spark ignition timing control and the fuel injection timing control provided by the present invention.

In Fig. 4, pulser signals with a negative polarity are the odd numbered start counter signals SL3 and SL5 generated at introduction of the rotating reluctor, that is, at a time the reluctor is brought to the pulser coil. On the other hand, pulser signals with a positive polarity are the even numbered end counter signals SL4 and SL6 generated at removal of the rotating reluctor, that is, at a time the reluctor is separated away from the pulser coil.

It should be noted that the explanation is given by assuming that the signal SL5 is the most recent start counter signal.

The period of time between the odd numbered start counter signal SL3 and the even numbered end counter signal SL4 corresponds to a reluctor with a circumference set at 45°. Since the circumference of the reluctor is 45°, the ratio of the circumference to the rotational period is $1/2^3$.

The period of time between the odd numbered start counter signal SL3 of the immediately preceding rotation and the most recent odd numbered start counter signal SL5 or the period of time between the even numbered end counter signal SL4 of the immediately preceding rotation and the most recent even numbered end counter signal SL6 corresponds to 1 period or 1 rotation CR of the crank shaft. It should be noted that 1 rotational period has a fixed value of 360°. In a system adopting a time unit, however, the rotational period, that is, the period of time between the odd numbered start counter signal SL3 of the immediately preceding rotation and the most recent odd numbered start counter signal SL5 (SL5 - SL3) or the period of time between the even numbered end counter signal SL4 of the immediately preceding rotation and the most recent even numbered end counter signal SL6 (SL6 - SL4) varies depending on the revolution speed.

As the start counter signal SL3 of the immediately preceding rotation arrives, first of all, the revolution speed N of the crank shaft is computed from the rotational period CR1 leading ahead of the present one by 2 rotations.

Then, in order to determine the current spark ignition timing, the revolution speed N is used in a search of the table for an optimum value (BTDC) of the crank angle. Then, the value of the timing advance is further converted into a time by using the time function (CR1 = 1/N ). In this case, the rotational period is a period of time between the odd numbered start counter signal SL1 and the odd numbered start counter signal SL3 (SL3 - SL1).

In addition, in order to find the fuel injection volume, signals generated by a variety of sensors such as the throttle angle sensor, the intake manifold depression pressure (PB) sensor and the water temperature sensor are read in and checked to determine whether or not the values of any of these signals are abnormal.

Then, the revolution speed and the value of a sensor signal, typically, the throttle quantity TH, are used in a search of the map for a value of the fuel injection volume.

By the same token, the value of the fuel injection volume is converted into a valve opening time.

Also in this case, the rotational period is a period of time between the odd numbered start counter signal SL1 and the odd numbered start counter signal SL3 (SL3 - SL1).

A final spark ignition time is found from the value obtained earlier in the search of the table and used as a signal IGT.

By the same token, a final fuel injection data is found from the value obtained earlier in the search of the map and used as a signal IJT.

It should be noted that the search of the table in computation of a signal IGT and the search of the map in computation of a signal IJT are carried out with timing A(n) in the pulser signal operation period (SL4 - SL3) after execution of computation of the immediately preceding spark ignition time Tig1 (n-1) and computation of the immediately preceding fuel injection time Tij1 (n-1) respectively, or with timing B(n) in the period CR2 leading ahead of the current one by 1 rotation after execution of computation of the immediately preceding spark ignition time Tig2 (n-1) and computation of the immediately preceding fuel injection time Tij2 (n-1) respectively after generation of the end counter signal SL4.

In addition, the search of the table and the search of the map are carried out only with the timing A(n), only with the timing B(n) or with both the timing A(n) and the timing B(n).

Then, as the most recent start counter signal SL5 arrives, a most recent spark ignition time Tig is found from an angle of the rotational period (SL5 - SL3) leading ahead of the current one by 1 rotational period and the signal IGT representing the spark ignition time resulting from the search and the computation which have been carried out in the rotational period CR2 leading ahead of the current one by 1 rotational period and based on the rotational period (SL3 - SL1) leading ahead of the current one by 2 rotational periods.

By the same token, as the most recent start counter signal SL5 arrives, a most recent volume injection time Tij is found from an angle of the rotational period (SL5 - SL3) leading ahead of the current one by 1 rotational period and the signal IJT representing data of the fuel injection resulting from the search and the computation which have been carried out in the rotational period CR2 leading ahead of the current one by 1 rotational period and based on the rotational period (SL3 - SL1) leading ahead of the current one by 2 rotational periods.

A formula used in the processing to find the spark ignition time is expressed by Eq. 1. In the equation, notation Tig1 denotes the spark ignition time for the sake of convenience.

$$\text{Tig1} = \text{CR2} \times \text{IGT} \times (90°/360°) - \text{Tig Processing Time} \qquad (1)$$

Eq. 1 is explained as follows. Notation CR2 denotes the most recent rotational period (SL5 - SL3). Notation IGT is a signal representing a spark ignition time, that is, a result of the search and the computation which have been carried out in the rotational period CR2 leading ahead of the current one by 1 rotational period and based on the rotational period (SL3 - SL1) leading ahead of the current one by 2 rotational periods. The Tig processing time is the time it takes to carry out this processing.

Since the ratio of BTDC angle to the rotational period is a function of time, the expression on the right hand side of Eq. 1 includes a fraction (90°/360°) which can be computed by division. The numerator 90° of the fraction is stored in advance to be divided by an angle of 360° corresponding to 1 rotational period so as to allow the quotient to be computed.

In the actual processing, however, Eq. 1 is replaced by Eq. 2 given below in order to implement the division by a shift operation:

$$Tig1 = CR2 \times IGT \times (1/2^2) - \text{Tig Processing Time} \qquad (2)$$

If the end counter signal SL6 arrives while the spark ignition time Tig1 is being computed as described above, the processing is carried out by replacing most recent rotational period (SL5 - SL3) with the period of time between the start counter signal SL5 and the end counter signal SL6 and the output signal Tig is output as a signal representing the spark ignition time.

It should be noted that this processing is processing wherein an angle of 360° corresponding to 1 rotational period is switched to an angle of 45° between the start counter signal SL5 and the end counter signal SL6. Since the circumference of the reluctor is 45°, the ratio of the circumference to the rotational period is $1/2^3$.

In this case, a formula used in the processing can be expressed by Eq. 3 as follows:

$$Tig2 = DT \times IGT \times (90°/45°) - DT - \text{Tig Processing Time} \qquad (3)$$

where notation Tig2 denotes the spark ignition time for the sake of convenience.

Eq. 3 is explained as follows. Notation DT is the most recent pulser signal operation time (SL6 - SL5). Notation IGT is a signal representing a spark ignition time, that is, a result of the search and the computation which have been carried out in the rotational period CR2 leading ahead of the current one by 1 rotational period and based on the rotational period (SL3 - SL1) leading ahead of the current one by 2 rotational periods. The Tig processing time is the time it takes to carry out this processing.

Since the ratio of BTDC angle to the rotational period is a function of time, the expression on the right hand side of Eq. 3 includes a fraction (90°/45°) which can be computed by division. The numerator 90° of the fraction is stored in advance to be divided by an angle of 45° so as to allow the quotient to be computed.

In the actual processing, however, Eq. 3 is replaced by Eq. 4 given below in order to implement the division by a shift operation:

$$Tig2 = DT \times IGT \times (2^1) - DT - \text{Tig Processing Time} \qquad (4)$$

Being the same as the processing formulas for the spark ignition time described above, the explanation of the processing formulas for the fuel injection time is omitted. The fuel injection volume can be found from an equation corresponding to Eq. 4 for the spark ignition time. It should be noted that formulas for finding the fuel injection time can be derived by replacing notations IGT, Tig, Tig1 and Tig2 used in the processing formulas for the spark ignition time with by notations IJT, Tij, Tij1 and Tij2 respectively.

As described above, in the engine control apparatuses according to claims 1 and 2, control processing is divided into processing carried out by a search/processing means and processing carried out by an operation timing processing means. The processing carried out by the search/processing means leads ahead of the processing carried out by the operation timing processing means by 1 rotational period. Since the ratio of the circumference of the reluctor to the rotational period is $1/2^N$ where the symbol N is a natural number. As a result, an accurate and optimum spark ignition time and/or an accurate and optimum fuel injection time can be controlled because it is possible to obtain a spark ignition time and/or a fuel injection time in a rotational period based on most recent sensor signals and not affected by variations in engine revolution speed and variations in processing time accompanying changes in table search result value and/or map search result value due to fast switching to the most recent signals which is made possible by implementation of conversion based on a time function by a shift operation even if the revolution speed of the engine varies during an operation to find the spark ignition time and/or the fuel injection time.

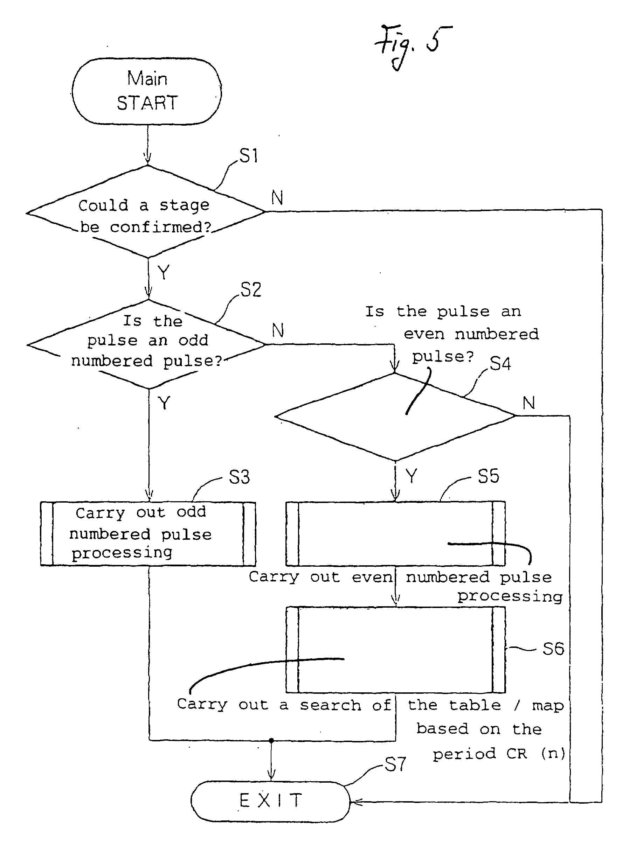

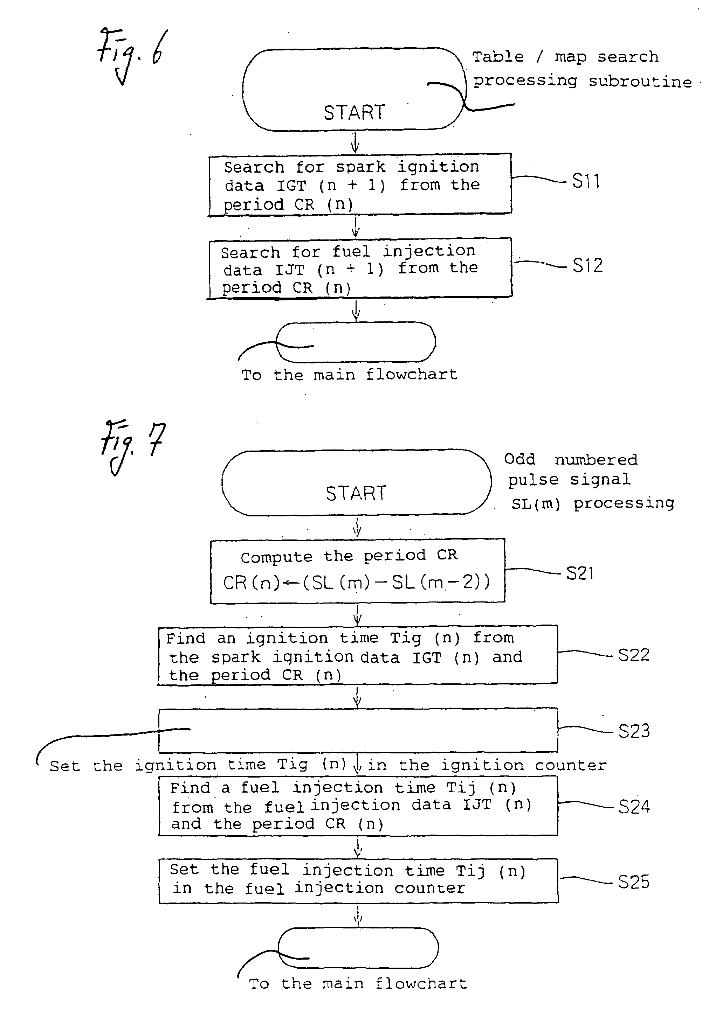

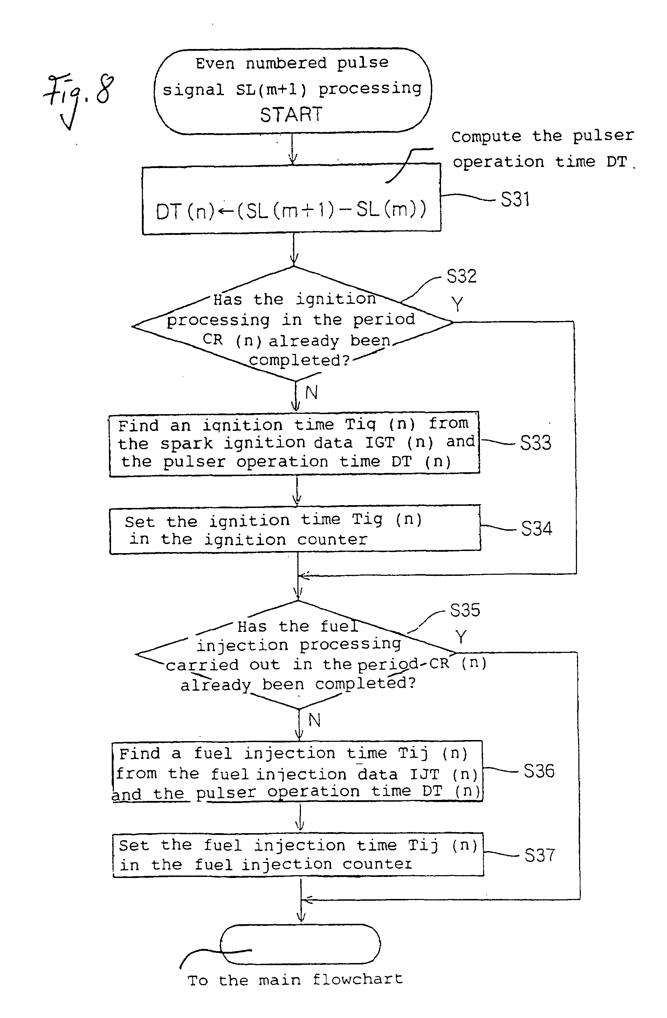

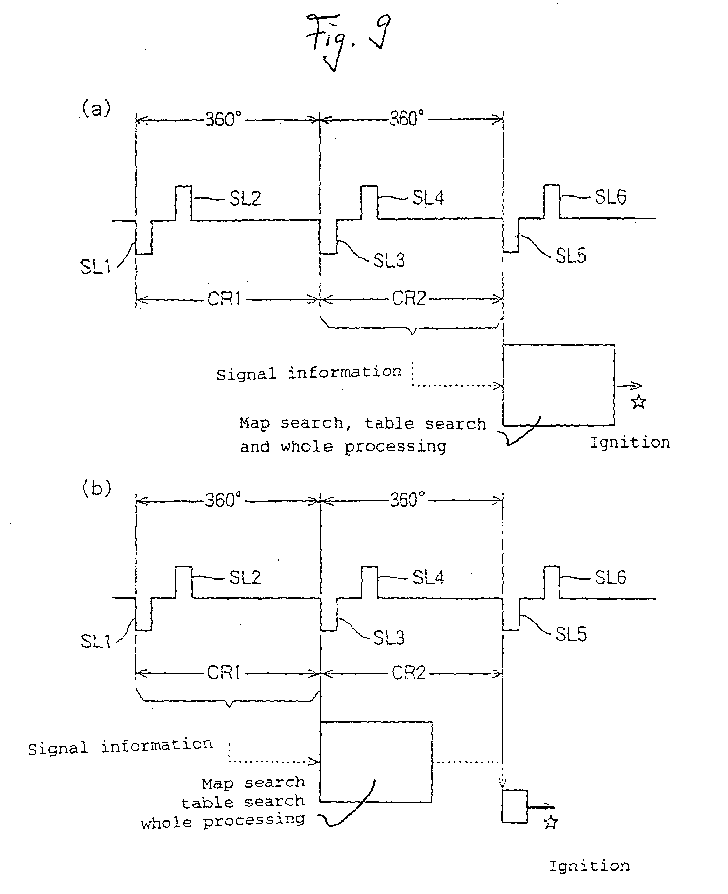

Figs. 5 to 8 show flowcharts representing the control method adopted in the engine control apparatus provided by the present invention. To be more specific, Fig. 5 shows a main flowchart and Fig. 6 shows a flowchart representing the search of a table/map. Fig. 7 shows a flowchart representing processing of an odd numbered pulser signal and Fig. 8 shows a flowchart representing processing of an even numbered pulser signal.

It should be noted that the search of a table/map shown in Fig. 6 is the sub-processing with a processing time thereof variable dependently on the value of an input signal, part of the processing from a process to input a pulser signal to a process to output a spark ignition time and/or a fuel injection time described in claim 3. On the other hand, the pieces of processing shown in Figs. 7 and 8 are each the sub-processing with a processing time thereof invariable independently of the value of an input signal, part of the processing from a process to input a pulser signal to a process to output a spark ignition time and/or a fuel injection time described in claim 3.

In the processing represented by the main flowchart shown in Fig. 5, after the power is turned on and initialization is completed, the rotation of the crank is started, resulting in a plurality of input pulses. As shown in the figure, the flowchart then begins with a step S1 to form a judgment as to whether or not a stage has been confirmed. If a stage has been confirmed, the flow of processing goes on to a step S2. If a stage can not be confirmed, on the other hand, the flow of processing proceeds to an exit step S7 to leave the main flowchart.

At the step S2, a pulse is checked to form a judgment as to whether or not the pulse is an odd numbered pulse. If the pulse is an odd numbered pulse, the flow of processing continues to a step S3 at which odd numbered pulse processing is carried out. If the pulse is not an odd numbered pulse, on the other hand, the flow of processing continues to a step S4. It should be noted that details of the odd numbered pulse processing carried out at the step S3 are represented by the flowchart shown in Fig. 7.

At the step S4, the pulse is checked to form a judgment as to whether or not the pulse is an even numbered pulse. If the pulse is an even numbered pulse, the flow of processing continues to a step S5 at which even numbered pulse processing is carried out. If the pulse is not an even numbered pulse, on the other hand, the flow of processing proceeds to the exit step S7 to leave the main flowchart. It should be noted that details of the even numbered pulse processing carried out at the step S5 are represented by the flowchart shown in Fig. 8.

After carrying out the even numbered pulse processing carried out at the step S5, the flow of processing goes on to a step S6 at which the search of the table/map based on a period CR (n) is carried out. It should be noted that details of the search of the table/map carried out at the step S6 are represented by the flowchart shown in Fig. 6. After carrying out the search of the table/map carried out at the step S6, the flow of processing goes on to the exit step S7 to leave the main flowchart.

As described above, Fig. 6 shows a flowchart representing the search of a table/map. As shown in the figure, the flowchart begins with a step S11 at which the table is searched for spark ignition data IGT (n + 1) from the period CR (n) and sensor signals. The flow of processing then goes on to a step S12 at which the map is searched for fuel injection data IJT (n + 1) from the period CR (n) and sensor signals. The flow of processing then returns to the step S6 of the flowchart shown in Fig. 5.

As described above, Fig. 7 shows a flowchart representing processing of an odd numbered pulser signal. As shown in the figure, the flowchart begins with a step S21 at which processing of the period CR (n) is carried out. The flow of processing then goes on to a step S22 at which an ignition time Tig (n) is found from the spark ignition data IGT (n) and the period CR (n).

Then, the flow of processing proceeds to a step S23 at which the ignition time Tig (n) is set in an ignition counter. Subsequently, the flow of processing continues to a step S24. It should be noted the ignition counter counts down with the lapse of time from the ignition time Tig (n) set at the step S23 and, at the point of time the contents of the ignition counter become equal to 0, ignition processing is carried out.

At the step S24, a fuel injection time Tij (n) is found from the fuel injection data IJT (n) and the period CR (n).

Then, the flow of processing proceeds to a step S25 at which the fuel injection time Tij (n) is set in a fuel injection counter. It should be noted the fuel injection counter counts down with the lapse of time from the fuel injection time Tij (n) set at the step S25 and, at the point of time the contents of the fuel injection counter become equal to 0, fuel injection is carried out.

As described above, Fig. 8 shows a flowchart representing processing of an even numbered pulser signal. As shown in the figure, the flowchart begins with a step S31 at which a pulser operation time DT is found. The flow of processing then goes on to a step S32 to form a judgment as to whether or not the ignition processing in the period CR (n) has already been completed. If the ignition processing has already been completed, the flow of processing proceeds to a step S35. If the ignition processing has not been completed yet, on the other hand, the flow of processing proceeds to a step S33.

At the step S33, an ignition time Tig (n) is computed from the spark ignition data IGT (n) and the pulser operation time DT (n). Then, the flow of processing goes on to a step S34 at which the ignition time Tig (n) computed at the step S33 is set in the ignition counter.

At the step S35, the fuel injection processing carried out in the period CR (n) is examined to form a judgment as to whether or not the processing has already been completed. If the processing has already been completed, the flow of processing returns to the main flowchart. If the processing has not been completed yet, on the other hand, the flow of processing goes on to a step S36 at which an fuel injection time Tij (n) is computed from the fuel injection data IJT (n) and the pulser operation time DT (n).

Then, the flow of processing goes on to a step S37 at which the fuel injection time Tij (n) computed at the step S36 is set in the fuel injection counter. The flow of processing then returns to the main flowchart.

It should be noted that the computations carried out in the pieces of processing represented by the flowcharts shown in Figs. 7 and 8 are each implemented by a shift operation which requires a fixed time to complete. Thus, a period immediately preceding each of the computations can be used as the period CR used in the computations.

On the other hand, the searches of the table and the map for spark ignition data IGT and the fuel injection data IJT respectively each vary in dependence upon the point of time the search is carried out. For this reason, the period used in the search of the table or the map is a period leading ahead of the period CR used in the computation of the ignition time Tig (n) or the fuel injection time Tij (n) respectively by 1 period.

As described above, the engine control apparatus according to claim 1 divides control processing into processing carried out by a search/processing means and processing carried out by an operation timing processing means. Since the processing carried out by the search/processing means leads ahead of the processing carried out by the operation timing processing by 1 operation period, it is possible to obtain a spark ignition time and/or a fuel injection time in a rotational period based on most recent sensor signals and not affected by variations in engine revolution speed and variations in processing time accompanying changes in table search result value and/or map search result value, allowing low cost, accurate and optimum control to be executed.

In addition, in the engine control apparatus according to the present invention, since the ratio of the circumference of the reluctor to the rotational period is $1/2^N$ where the symbol N is a natural number, quantities such as the revolution speed can be converted into a time by carrying out a shift operation instead of division (CR = 1/N). Thus, finer control makes it possible to find a highly accurate spark ignition time and/or a highly accurate fuel injection time not affected by variations in engine revolution speed. As a result, the processing time keeps up with variations in revolution speed of the crank shaft of the engine even in the case of an engine high revolution speed or a high car speed and in the case of large variations in revolution speed observed typically during an idling state, allowing an accurate and optimum spark ignition time and/or an accurate and optimum fuel injection time to be controlled.

Thus, by allocating processing to two different rotational periods, even a low performance microcomputer is capable of offering a processing time that keeps up with the revolution of the crank shaft of the engine in the event of a change in engine load and a variation in crank shaft revolution speed, making it possible to provide a simple configuration and low cost engine control apparatus capable of controlling a spark ignition time and/or fuel injection time with a high degree of accuracy and a control method adopted in the engine control apparatus.

The invention aims to provide a simple configuration and low cost engine control apparatus capable of controlling a spark ignition time and a fuel injection time with a high degree of accuracy wherein, by allocating processing carried out by the apparatus to two different rotational periods, even a low performance microcomputer employed by the apparatus is capable of offering a processing time that keeps up with the revolution of the crank shaft of the engine in the event of a change in engine load and a variation in crank shaft revolution speed.

In order to solve the problem described above, there is provided an engine control apparatus 1 comprising a plurality of sensors 2 such as an engine rotation sensor, a throttle angle sensor, an intake manifold depression pressure (PB) sensor and a water temperature sensor, a counting means 3, a search/processing means 4 and an operation timing processing means 5.

**Claims**

1. An engine control apparatus for controlling a spark ignition time and/or a fuel injection time based on a pulser signal generated by a pulser coil provided for a reluctor installed on a rotor rotating in a manner interlocked with a crank shaft, said engine control apparatus **characterized by** comprising:

   a counting means for counting the number of pulses composing said pulser signal;
   a search/processing means for carrying out a search of a table and/or a map based on a rotational period of said pulser signal for a value and carrying out processing based on said value; and
   an operation timing processing means for finding a spark ignition time and/or a fuel injection time on the basis of said rotational period and said value found in said search carried out by said search/processing means, wherein control processing is divided into processing carried out by said search/processing means with a processing time thereof variable dependently on an input signal and processing carried out by said operation timing processing means with a processing time thereof invariable independently of an input signal, and said processing carried out by said search/processing means is carried out in a rotational period leading ahead of said processing carried out by said operation timing processing means by 1 rotational period.

2. An engine control apparatus according to claim 1 **characterized in that**

   a ratio of a circumference of said reluctor to said rotational period is equal to $1/2^N$ where the symbol N is a natural number.

3. A control method of an engine control apparatus for controlling a spark ignition time and/or a fuel injection time based on a pulser signal generated by a pulser coil provided for a reluctor installed on a rotor rotating in a manner interlocked with a crank shaft,

said control method **characterized in that**
processing from a process to input said pulser signal to a process to output a spark ignition time and/or a fuel injection time is divided into sub-processing with a processing time thereof variable dependently on the value of an input signal and sub-processing with a processing time thereof invariable independently of the value of an input signal and
said sub-processing with a variable processing time is carried out in a rotational period leading ahead of said sub-processing with an invariable processing time by 1 rotational period.

**Patentansprüche**

1. Motorsteuer/Regelvorrichtung zur Steuerung/Regelung einer Funkenzündzeit und/oder einer Kraftstoffeinspritzzeit basierend auf einem Impulsgebersignal, welches von einer Impulsgeberspule erzeugt wird, die für einen Induktionsgeber vorgesehen ist, welcher an einem Rotor angebracht ist, der sich in einer mit einer Kurbelwelle gekoppelten Weise dreht, wobei die Motorsteuer/Regelvorrichtung **dadurch gekennzeichnet ist, dass** sie umfasst:

   ein Zählmittel zum Zählen der Anzahl an Pulsen, welche das Impulsgebersignal zusammensetzen;
   ein Such/Verarbeitungsmittel zur Durchführung einer Durchsuchung einer Tabelle und/oder eines Kennfelds basierend auf einer Drehperiode des Impulsgebersignals nach einem Wert und Durchführung einer Verarbeitung basierend auf dem Wert; und
   ein Betriebszeitverarbeitungsmittel zum Auffinden einer Funkenzündzeit und/oder einer Kraftstoffeinspritzzeit auf der Basis der Drehperiode des in der von dem Such/Verarbeitungsmittel durchgeführten Durchsuchung gefundenen Werts,

   wobei die Steuer/Regelverarbeitung unterteilt ist in eine von dem Such/Verarbeitungsmittel durchgeführte Verarbeitung, deren Verarbeitungszeit variabel von einem Eingangssignal abhängt, und eine von dem Betriebszeitverarbeitungsmittel durchgeführte Verarbeitung, deren Verarbeitungszeit unveränderlich unabhängig von einem Eingangssignal ist, und wobei die von dem Such/Verarbeitungsmittel durchgeführte Verarbeitung in einer Drehperiode durchgeführt wird, welche um 1 Drehperiode der von dem Betriebszeitverarbeitungsmittel durchgeführten Verarbeitung vorauseilt.

2. Motorsteuer/Regelvorrichtung gemäß Anspruch 1, **dadurch gekennzeichnet,**
   **dass** ein Verhältnis eines Umfangs des Induktionsgebers zu der Drehperiode gleich $1/2^N$ ist, wobei das Symbol N eine natürliche Zahl ist.

3. Steuer/Regelverfahren einer Motorsteuer/Regelvorrichtung zur Steuerung/Regelung einer Funkenzündzeit und/oder einer Kraftstoffeinspritzzeit basierend auf einem Impulsgebersignal, welches von einer Impulsgeberspule erzeugt wird, die für einen Induktionsgeber vorgesehen ist, welcher an einem Rotor angebracht ist, der sich in einer mit einer Kurbelwelle gekoppelten Weise dreht,
   wobei das Steuer/Regelverfahren **dadurch gekennzeichnet ist,**
   **dass** eine Verarbeitung von einem Verfahren zur Eingabe des Impulsgebersignals zu einem Verfahren zur Ausgabe einer Funkenzündzeit und/oder einer Kraftstoffeinspritzzeit unterteilt ist in eine Unterverarbeitung, deren Verarbeitungszeitpunkt variabel von dem Wert eines Eingangssignals abhängt, und eine Unterverarbeitung, deren Verarbeitungszeitpunkt unveränderlich unabhängig von dem Wert eines Eingangssignals ist, und
   **dass** die Unterverarbeitung mit einer variablen Verarbeitungszeit in einer Drehperiode durchgeführt wird, welche um 1 Drehperiode der Unterverarbeitung mit einer unveränderlichen Verarbeitungszeit vorauseilt.

**Revendications**

1. Appareil de commande de moteur pour commander un temps d'allumage de bougie et/ou un temps d'injection de carburant en fonction d'un signal d'impulsion généré par une bobine d'impulsion fournie pour un dispositif de réluctance installé sur un rotor tournant d'une manière verrouillée avec un vilebrequin, ledit appareil de commande de moteur étant **caractérisé en ce qu'**il comprend :

un moyen de comptage pour compter le nombre d'impulsions composant ledit signal d'impulsion ;
un moyen de recherche/traitement pour effectuer une recherche dans un tableau et/ou une carte en fonction d'une période de rotation dudit signal d'impulsion pour une valeur et pour effectuer le traitement en fonction de ladite valeur ; et
un moyen de traitement de synchronisation d'opération pour trouver un temps d'allumage de bougie et/ou un temps d'injection de carburant en fonction de ladite période de rotation et de ladite valeur trouvée dans ladite recherche effectuée par ledit moyen de recherche/traitement,

dans lequel le traitement de commande est divisé en un traitement effectué par ledit moyen de recherche/traitement avec un temps de traitement variable en fonction d'un signal d'entrée et en un traitement effectué par ledit moyen de traitement de synchronisation d'opération avec un temps de traitement invariable indépendamment d'un signal d'entrée, et ledit traitement effectué par ledit moyen de recherche/traitement est effectué dans une période de rotation en avance sur ledit traitement effectué par ledit moyen de traitement de synchronisation d'opération d'une période de rotation.

2. Appareil de commande de moteur selon la revendication 1 **caractérisé en ce que** :

un rapport d'une circonférence dudit dispositif de réluctance sur ladite période de rotation est égal à $\frac{1}{2}N$, où le symbole N est un nombre naturel.

3. Procédé de commande d'un appareil de commande de moteur pour commander un temps d'allumage de bougie et/ou un temps d'injection de carburant en fonction d'un signal d'impulsion généré par une bobine d'impulsion fournie pour un dispositif de réluctance installé sur un rotor tournant d'une manière verrouillée avec un vilebrequin, ledit procédé de commande étant **caractérisé en ce que** :

le traitement à partir d'un processus pour entrer ledit signal d'impulsion à un processus pour délivrer un temps d'allumage de bougie et/ou un temps d'injection de carburant est divisé en un sous-traitement avec un temps de traitement variable en fonction de la valeur d'un signal d'entrée et en un sous-traitement avec un temps de traitement invariable indépendamment de la valeur d'un signal d'entrée, et
ledit sous-traitement avec un temps de traitement variable est effectué dans une période de rotation en avance sur ledit sous-traitement avec un temps de traitement invariable d'une période de rotation.

EP 0 893 591 B1

# Fig. 1

1 Engine control apparatus

Sensor

SL

2

Counting means

SC

3

4 Search / processing means

IGT
IJT

5

Operation timing processing means

Tij

EP 0 893 591 B1

Fig. 2

4 Search / processing means

Storage /
processing
means

Search means

Search / processing means

SL

11

12

13

IGT
IJT

Processing means

SC

Fig. 7

10 Engine control apparatus

Switch means — 6

Tigo
Tijo

Operation timing
processing means — 5

IGT
IJT

Search /
processing means — 4

SC

Counting means — 3

Sensor

SL

2

Tij

Fig. 4

Fig. 5

```
         ┌──────────────┐
         │     Main     │
         │    START     │
         └──────────────┘
                │
                ▼              S1
           ╱─────────╲          N
          ╱ Could a stage ╲ ──────────────────────────────────┐
          ╲ be confirmed? ╱                                    │
           ╲─────────╱                                         │
                │ Y                                            │
                ▼              S2                              │
           ╱─────────╲          N    Is the pulse an          │
          ╱   Is the   ╲ ──────────  even numbered            │
          ╲ pulse an odd ╱           pulse?      S4           │
          ╲numbered pulse?╱              │                    │
           ╲─────────╱                   ▼                    │
                │ Y                 ╱─────────╲     N          │
                │                  ╱           ╲ ──────────────┤
                │                  ╲           ╱               │
                │                   ╲─────────╱                │
                │ S3                     │ Y      S5           │
                ▼                        ▼                     │
        ┌────────────────┐       ┌────────────────┐           │
        ║ Carry out odd  ║       ║                ║           │
        ║ numbered pulse ║       ║                ║           │
        ║  processing    ║       ║                ║           │
        └────────────────┘       └────────────────┘           │
                │                Carry out even numbered pulse │
                │                         │       processing   │
                │                         ▼                    │
                │                ┌────────────────┐            │
                │                ║                ║  S6        │
                │                ║                ║            │
                │                ║                ║            │
                │                └────────────────┘            │
                │             Carry out a search of the table / map
                │                     based on the            │
                └──────────┐         period CR (n)            │
                           ▼                                  │
                    ┌──────────────┐     S7                   │
                    │    EXIT      │ ◄────────────────────────┘
                    └──────────────┘
```

**Fig. 6**

Table / map search processing subroutine

START

Search for spark ignition data IGT (n + 1) from the period CR (n) — S11

Search for fuel injection data IJT (n + 1) from the period CR (n) — S12

To the main flowchart

**Fig. 7**

Odd numbered pulse signal SL(m) processing

START

Compute the period CR
$$CR(n) \leftarrow (SL(m) - SL(m-2))$$
— S21

Find an ignition time Tig (n) from the spark ignition data IGT (n) and the period CR (n) — S22

Set the ignition time Tig (n) in the ignition counter — S23

Find a fuel injection time Tij (n) from the fuel injection data IJT (n) and the period CR (n) — S24

Set the fuel injection time Tij (n) in the fuel injection counter — S25

To the main flowchart

*Fig. 8*

```
        ┌─────────────────────────┐
        │  Even numbered pulse     │
        │ signal SL(m+1) processing│
        │         START            │
        └─────────────────────────┘
                    │
                    ▼
```

Compute the pulser
operation time DT.

$$DT(n) \leftarrow (SL(m+1) - SL(m))$$  — S31

Has the ignition processing in the period CR(n) already been completed? — S32

Y →

N ↓

Find an ignition time Tig(n) from the spark ignition data IGT(n) and the pulser operation time DT(n) — S33

Set the ignition time Tig(n) in the ignition counter — S34

Has the fuel injection processing carried out in the period CR(n) already been completed? — S35

Y →

N ↓

Find a fuel injection time Tij(n) from the fuel injection data IJT(n) and the pulser operation time DT(n) — S36

Set the fuel injection time Tij(n) in the fuel injection counter — S37

To the main flowchart

# Fig. 9

**(a)**

Signal information ⋯⋯⋯⋯⋯➔

Map search, table search and whole processing

Ignition ☆

**(b)**

Signal information ⋯⋯⋯⋯➔

Map search table search whole processing

Ignition ☆

## Fig. 10

Sensor

51

52 Fly wheel (Rotor)

53 Reluctor

54 Pulser coil

Pulser signal SL

Load sensor

Correction sensor

Engine control unit

( E C U )

55

To the ignition coil

To the injection injector

Tig
Tij

EP 0 893 591 B1